# EUROPÄISCHE PATENTSCHRIFT

(11) **EP 0 907 824 B1**
(45) Veröffentlichungstag und Bekanntmachung des Hinweises auf die Patenterteilung: **15.03.2000**
(21) Anmeldenummer: 97930467.2
(22) Anmeldetag: 01.07.1997
(51) Int. Cl.: F01N 7/18, B21D 22/20, F01N 3/28, F01N 3/02

(54) **ABGASREINIGUNGSVORRICHTUNG FÜR EINEN VERBRENNUNGSMOTOR SOWIE VERFAHREN ZU IHRER HERSTELLUNG**
EXHAUST GAS PURIFICATION DEVICE FOR AN INTERNAL COMBUSTION ENGINE AND METHOD OF PRODUCING THE SAME
DISPOSITIF D'EPURATION DES GAZ D'ECHAPPEMENT POUR MOTEUR A COMBUSTION INTERNE ET PROCEDE PERMETTANT DE LE PRODUIRE

(30) Priorität: 03.07.1996 DE 19626692
(43) Veröffentlichungstag der Anmeldung: 14.04.1999
(73) Patentinhaber: ZEUNA-STÄRKER GMBH & CO KG, 86154 Augsburg (DE)
(72) Erfinder: VOSS, Gerhard, D-94501 Aidenbach (DE)
(74) Vertreter: Grättinger & Partner (GbR)
(86) Internationale Anmeldenummer: EP9703431
(87) Internationale Veröffentlichungsnummer: WO9801654

(56) Entgegenhaltungen:
- EP-A- 0 395 540
- DE-A- 4 322 062
- FR-A- 2 238 585
- US-A- 4 229 965
- US-A- 5 271 142

## Beschreibung

Die vorliegende Erfindung betrifft eine Abgasreinigungsvorrichtung für einen Verbrennungsmotor mit einem quer zur Durchströmungsrichtung geteilten metallischen Gehäuse und mindestens einem darin gelagerten Katalysator- oder Rußfilterkörper, wobei die beiden Gehäusehälften jeweils einen Anschlußbereich, einen konischen Übergangsbereich und einen zylindrischen Lagerbereich umfassend einstückig aufgebaut sind. Sie betrifft des weiteren ein Verfahren zur Herstellung einer derartigen Abgasreinigungsvorrichtung.

Aus der deutschen Patentschrift 4322062 ist eine gattungsgemäße katalytische Abgasreinigungsvorrichtung bekannt. Die beiden Gehäusehälten werden dabei durch Innenhochdruckumformung eines einzigen Rohres und anschließendes Auftrennen des aufgeweiteten Rohres quer zur Durchströmungsrichtung hergestellt. Bei der Innenhochdruckumformung werden dabei an den beiden späteren Gehäusehälften, und zwar im Bereich des Randes des jeweiligen Lagerbereichs zwei zueinander korrespondierende Gewinde ausgeformt, die ein späteres Verschrauben der beiden Gehäusehälften miteinander ermöglichen. Zum Zwecke der Verschraubbarkeit der beiden Gehäusehälften miteinander haben diese einen kreisförmigen Querschnitt.

Als Nachteil dieser bekannten Abgasreinigungsvorrichtung sind insbesondere deren geringe Änderungsflexibilität bei unterschiedlicher Werkstückgeometrie und die hierdurch bedingten hohen Herstellungskosten zu sehen. Diese sind maßgeblich dadurch bestimmt, daß für jeden einzelnen Typ der Abgasreinigungsvorrichtung ein individuelles Werkzeug hergestellt und bereitgehalten werden muß.

Gegenüber dem angegebenen Stand der Technik liegt der vorliegenden Erfindung insbesondere die Aufgabe zugrunde, eine Abgasreinigungsvorrichtung der eingangs genannten Art zu schaffen, die kostengünstiger herstellbar sein soll.

Diese Aufgabe wird erfindungsgemäß dadurch gelöst, daß jede der beiden Gehäusehälften durch hydromechanisches Tiefziehen aus einem ebenen Blechzuschnitt hergestellt ist. Das erfindungsgemäße Verfahren zur Herstellung einer Abgasreinigungsvorrichtung der gattungsgemäßen Art umfaßt somit die folgenden Schritte:
- Zuschneiden von zwei Ronden bzw. der Endkontur angepaßten Blechzuschnitten (alternativ ist das Umformen direkt vom Coil möglich).
- Umformen der Blechzuschnitte zu Gehäusehälften mit jeweils einem Anschlußbereich, einem konischen Übergangsbereich und einem, bevorzugt zylindrischen, Lagerbereich durch hydromechanisches Tiefziehen;
- Abtrennen der Zarge;
- Lochen der Gehäusehälften im jeweiligen Anschlußbereich;
- Einsetzen des mindestens einen Katalysator- bzw. Rußfilterkörpers in die Gehäusehälften;
- Zusammenfügen der Gehäusehälften; und
- Verbinden der Gehäusehälften miteinander mittels einer in Umfangsrichtung umfaufenden Naht.

Zentrales Merkmal der vorliegenden Erfindung ist somit, daß jede der beiden Gehäusehälften aus einem Blechzuschnitt aus ebenem Blech durch hydromechanisches Tiefziehen hergestellt wird, wobei beim hydromechanischen Tiefziehen der Anschlußbereich, der konische Übergangsbereich und der, bevorzugt zylindrische, Lagerbereich jeder Gehäusehälfte ausgeformt wird. Hydromechanische Tiefziehverfahren zum Herstellen von Ziehstücken sind zwar als solche bekannt, bspw. aus der DE-A-3305902. Allerdings ist dem Stand der Technik keine Anregung auf die Herstellung von Abgasreinigungsvorrichtungen gattungsgemäßer Art in Anwendung eines hydromechanischen Tiefziehverfahrens zu entnehmen. Insbesondere gibt der Stand der Technik keinerlei Hinweis auf die bedeutenden Vorteile, die sich in Anwendung der vorliegenden Erfindung gegenüber der aus der DE-C-4322062 bekannten Herstellungsweise gattungsgemäßer Abgasreinigungsvorrichtungen erzielen lassen.

Zum einen können mit derselben Maschine und demselben Werkzeug unterschiedlich lange Gehäuse zur Aufnahme verschieden vieler Katalysator- bzw. Rußfilterkörper hergestellt werden. Je nach der Anzahl der in dem Gehäuse einer bestimmten Typenreihe einer Abgasreinigungsvorrichtung zu lagernden Katalysator- bzw. Rußfilterkörper sind lediglich unterschiedlich große Blechzuschnitte in die Maschine einzulegen und ist die Eindringtiefe des Tiefziehstempels zu verändern. Diese Möglichkeit, mit ein und derselben Maschine und ein und demselben Werkzeug allein durch Verändern der Eindringtiefe des Tiefziehstempels unterschiedliche Gehäuse-Varianten für eine Baureihe von Abgasreinigungsvorrichtungen herzustellen, schlägt sich in einer beträchtlichen Reduktion der Herstellkosten nieder. Insbesondere entfällt der mit der Herstellung unterschiedlicher Werkzeuge sowie der Umrüstung der Maschine verbundene Aufwand.

Ferner können in Anwendung der Erfindung Abgasreinigungsvorrichtungen hergestellt werden, deren Gehäuse einen an die jeweiligen Einbauverhältnisse angepaßten, nicht-runden Querschnitt aufweisen.

Des weiteren erweist sich als überaus vorteilhaft, daß, anders als dies für den gattungsbildenden Stand der Technik zutrifft, nicht das Innere des späteren Gehäuses mit Druckmedium beaufschlagt wird, sondern vielmehr das Äußere. Dies ermöglicht es gemäß einer Weiterbildung des erfindungsgemäßen Verfahrens, bei ein und demselben Arbeitsgang jeweils eine Gehäusehälfte sowie einen in deren Übergangsbereich angeordneten Innentrichter jeweils aus einem Blechzuschnitt herzustellen. In diesem Sinne können in die hydromechanische Tiefziehmaschine gleichzeitig zwei zueinander positionierte Blechzuschnitte eingelegt werden, nämlich ein größerer für die spätere Gehäusehälfte sowie ein kleinerer für den späteren Innentrichter. Beide Blechzuschnitte werden beim hydromechanischen Tiefziehen entsprechend der Kontur des Tiefziehstempels miteinander verformt. Dabei ist es sogar möglich, daß zwischen dem Innentrichterblechzuschnitt und dem Gehäusehälftenblechzuschnitt eine Lage eines Wärmedämmaterials eingebracht ist. Denn, wie bereits weiter oben hervorgehoben wurde, es dringt kein Druckmedium in das Innere der späteren Gehäusehälfte ein, so daß das Wärmedämmaterial trocken und unbeschädigt bleibt. Hier erweist sich das erfindungsgemäße Verfahren dem Stand der Technik weit überlegen. Denn die Ausbildung einer Gehäusehälfte mitsamt einem Innentrichter, welcher zur Innenwand des Übergangsbereichs der Gehäusehälfte einen mit Wärmedämmaterial ausgefüllten Abstand aufweist, in einem einzigen Arbeitsschritt, ist im Hinblick auf die Herstellkosten ersichtlich konkurrenzlos günstig. In diesem Zusammenhang darf nicht vergessen werden, welcher Aufwand bisher mit der isolierten Herstellung eines Innentrichters, dessen Handhabung einschließlich Einbringen und Ausrichten in der jeweiligen Gehäusehälfte und Befestigung daselbst verbunden ist.

Das erfindungsgemäße Verfahren läßt darüberhinaus zu, daß in die Gehäusehälften, sei es im Übergangsbereich, sei es im Lagerungsbereich axial verlaufende Sicken ausgeformt werden. Derartige Sicken haben in beträchtlichem Umfang eine Verringerung der Schallabstrahlung zur Folge. Im Lagerungsbereich für den/die Katalysator- bzw. Rußfilterkörper vorgesehene axiale Sicken haben darüberhinaus den Vorteil, in gewissem Umfang für einen Ausgleich von Fertigungstoleranzen der Katalysator- bzw. Rußfilterkörper zu sorgen. Darüberhinaus erleichtern sie das axiale Einschieben des/der Katalysator- bzw. Rußfilterkörper in die jeweilige Gehäusehälfte. Die Kompensation der bekanntermaßen großen, chargenabhängigen Fertigungstoleranzen des Katalysator- bzw. Rußfilterkörpers läßt sich weiterhin durch eine Segmentierung des Tiefziehstempels im Bereich des späteren zylindrischen Lagerbereichs erreichen. Die segmentförmigen Werkzeugteile können hierbei vor, während oder nach dem Umformprozeß durch die axiale Verstellung eines Kegels radial nach außen gedrückt werden und somit vor der Umformung gemessene, variable Umfangsabmessungen der Katalysator- oder Rußfilterkörper durch eine einfache Hubverstellung des Kegels ausgleichen.

Selbst die Ausformung eines schrägen Anschlußbereichs in der Weise, daß am Übergang vom Anschlußbereich zum konischen Übergangsbereich ein Hinterschnitt besteht, ist in Anwendung des erfindungsgemäßen Verfahrens möglich. Hierzu bedarf es lediglich eines mehrteiligen Tiefziehstempels, der einen aus- und einfahrbaren inneren Stempel zur Ausformung des schrägen Anschlußbereichs aufweist. Dieser Stempel kann bei nicht hinterschnittenen Werkstücken durch den Einsatz eines entsprechend gestalteten Schnittstempels ersetzt werden, wodurch es nach Abschluß der Umformung möglich wäre, den trichterförmig ausgebildeten Übergang des Katalysator- oder Rußfiltermantels im selben Werkzeug zu lochen. Bei hinterschnittigen Katalysator- oder Rußfiltermänteln ist es möglich, ein und denselben Stempel durch langsames Verfahren zum Umformen der hinterschnittigen Werkstückkontur sowie durch schnelles, stoßartiges Verfahren zum Lochen des Werkstücks einzusetzen.

Ersichtlich eignet sich das erfindungsgemäße Verfahren nach alledem zur kostengünstigen Herstellung nahezu sämtlicher gebräuchlicher Abgasreinigungsvorrichtungen. Dazu gehört auch, daß anders als dies für den gattungsbildenden Stand der Technik zutrifft, jede beliebige, insbesondere an die Einbauverhältnisse angepaßte Querschnittsform des Gehäuses in Anwendung des erfindungsgemäßen Verfahrens herstellbar ist. Was die Verbindung der beiden Gehäusehälften miteinander anbelangt, so kommen hier insbesondere eine Schweißverbindung, eine Falzverbindung oder auch ein Bajonettverschluß in Betracht. Eine sachkundig ausgeführte Schweißverbindung ist dabei weit weniger kritisch, als dies in der deutschen Patentschrift 4322062 geschildert ist.

Im folgenden wird die vorliegende Erfindung anhand in der Zeichnung dargestellter Ausführungsbeispiele näher erläutert. Dabei zeigt
- Fig. 1: eine in Anwendung des erfindungsgemäßen Verfahrens hergestellte katalytische Abgasreinigungsvorrichtung im Längsschnitt;
- Fig. 2: veranschaulicht die Herstellung einer Gehäusehälfte durch hydromechanisches Tiefziehen;
- Fig. 3: zeigt in perspektivischer Ansicht das gemäß Fig. 2 eingesetzte Ausgangsmaterial vor dem hydromechanischen Tiefziehen und
- Fig. 4: veranschaulicht eine bevorzugte Ausgestaltung eines im Rahmen des erfindungsgemäßen Verfahrens einsetzbaren Werkzeugs.

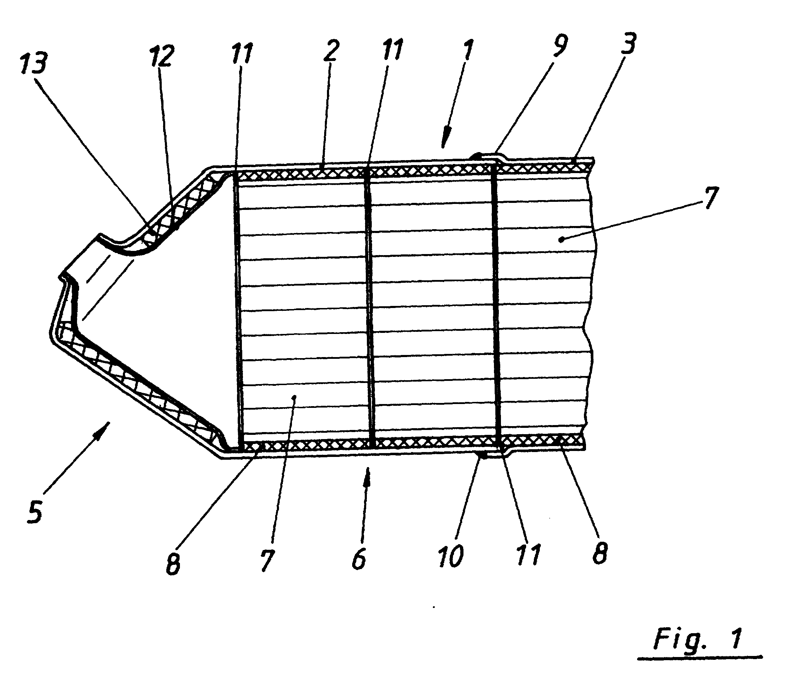

Gemäß Fig. 1 umfaßt die Abgasreinigungsvorrichtung ein Gehäuse 1, das unter Ausbildung zweier Gehäusehälften 2, 3 quer zur Strömungsrichtung geteilt ist. Jede der beiden Gehäusehälften umfaßt, wie bei der vollständig dargestellten Gehäusehälfte 2 ersichtlich, einen Anschlußbereich 4, einen konischen Übergangsbereich 5 und einen zylindrischen Lagerbereich 6. Im zylindrischen Lagerbereich jeder Gehäusehälfte ist dabei mindestens ein Katalysatorkörper 7 unter Zwischenlage einer Lagermatte 8 gelagert.

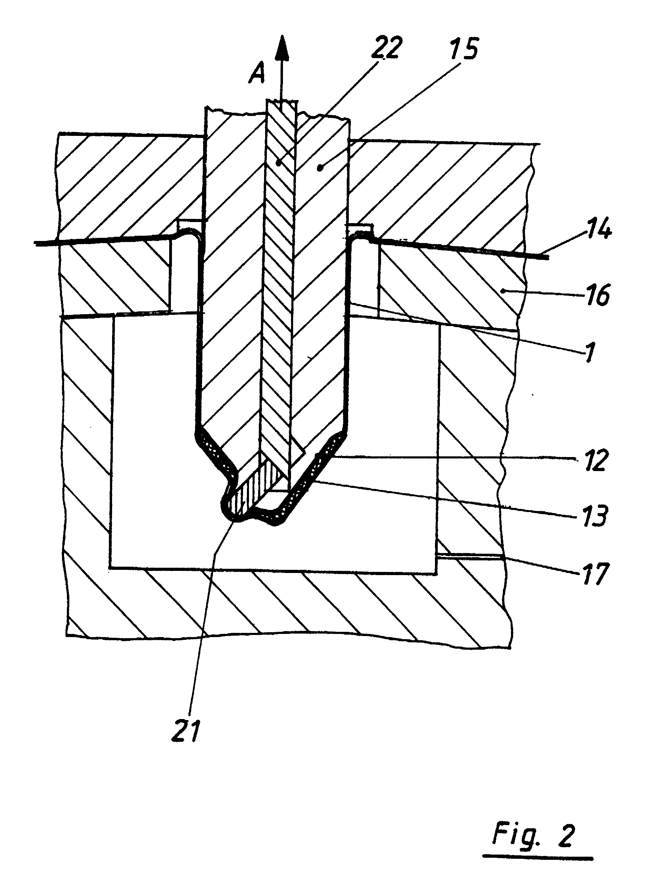

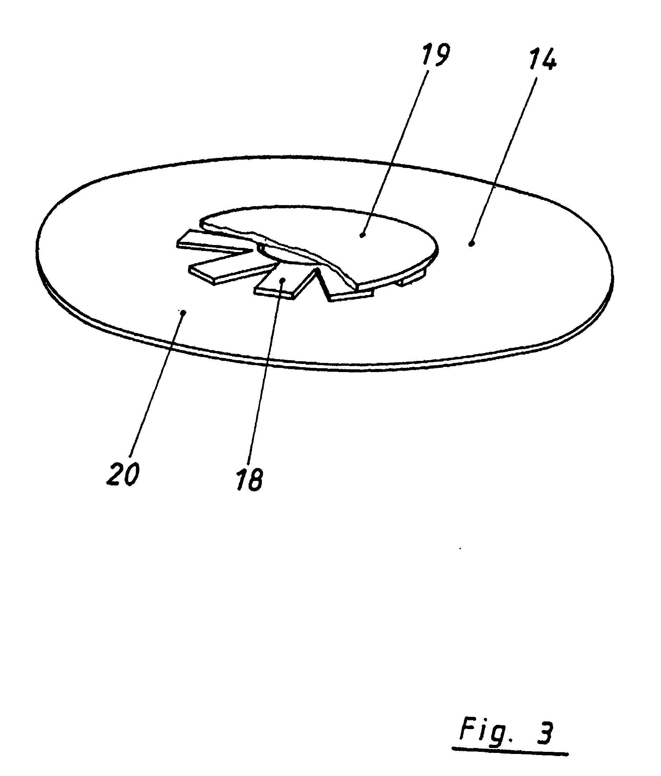

Jede der beiden Gehäusehälften 2 bzw. 3 ist durch hydromechanisches Tiefziehen aus einem ebenen Blechzuschnitt hergestellt. Dies wird weiter unten anhand der Figuren 2 und 3 weiter ausgeführt. Die Katalysatorkörper 7 werden axial in die jeweilige Gehäusehälfte eingesetzt. Zu ihrer exakten Positionierung dienen Ringe 11, die zwischen jeweils zwei Katalysatorkörpern zusätzlich als Distanzringe wirken. Zur Verbindung der beiden Gehäusehälften miteinander überlappen diese im angeführten Beispiel geringfügig. Hierzu weist die Gehäusehälfte 3 einen aufgeweiteten Rand 9 auf, in welchen die Gehäusehälfte 2 eingesteckt wird. Mittels einer umlaufenden Schweißnaht 10 werden anschließend beide Gehäusehälften miteinander fest verbunden. Grundsätzlich sind jedoch auch alternative Nahtausführungen, wie sie beim stoffschlüssigen Verbinden bekanntermaßen Anwendung finden, möglich.

Im Anschlußbereich 4 sowie im Übergangsbereich 5 des Gehäuses erstreckt sich ein Innentrichter 12. Dieser liegt im Anschlußbereich 4 eng am Gehäuse an; im Übergangsbereich 5 des Gehäuses hingegen hält der Innentrichter zur Gehäusewand einen Abstand ein, wobei zwischen dem Innentrichter und dem Gehäuse eine Lage 13 eines Wärmedämmaterials angeordnet ist.

Je nach der Anzahl der in dem Gehäuse unterzubringenden Katalysatorkörper 7 wird die Gehäusehälfte 2 länger oder kürzer ausgeführt. Unterschiedliche Längen der Gehäusehälfte 2 lassen sich dabei, wie insbesondere die Fig. 2 veranschaulicht, auf einfachste Weise mit derselben Maschine und demselben Werkzeug herstellen.

Fig. 2 veranschaulicht die Herstellung einer Gehäusehälfte aus einem ebenen Blechzuschnitt 14 durch hydromechanisches Tiefziehen. Dabei dringt ein Tiefziehstempel 15 in ein mit Flüssigkeit gefülltes Becken 16 ein. Der hierdurch entstehende, über eine Steuerbohrung 17 einstellbare Fluiddruck sorgt für eine Anlage des umzuformenden Blechs an den Tiefziehstempel 15. Hydraulische Tiefziehmaschinen der hier angewandten Art sind grundsätzlich bekannt; sie werden beispielsweise zur Herstellung von Kochtöpfen und Stahlhelmen eingesetzt. Auf eine weitergehende Beschreibung der Maschine, die in ihrem grundsätzlichen Aufbau nicht Gegenstand der vorliegenden Erfindung ist, wird daher verzichtet.

Fig. 2 zeigt, daß in Anwendung des erfindungsgemäßen Verfahrens die gleichzeitige Herstellung einer Gehäusehälfte sowie eines in deren Anschluß- und Übergangsbereich angeordneten Innentrichters 12 möglich ist. Das Ausgangsmaterial hierzu ist in Fig. 3 veranschaulicht. Auf einen großen, der Herstellung der Gehäusehälfte dienenden Blechzuschnitt 14 wird ein Element 18 aus einem Wärmedämmaterial aufgelegt, auf dieses wiederum ein kleinerer Blechzuschnitt 19, welcher der Herstellung des Innentrichters dient. Das Element 18 aus Wärmedämmaterial weist radial von außen nach innen gerichtete keilförmige Einschnitte 20 auf. Dies stellt sicher, daß beim Umformen der Blechzuschnitte 14 und 19 zur Herstellung des Katalysatorgehäuses bzw. des Innentrichters eine nennenswerte Stauchung des Wärmedämmaterials vermieden wird. Fig. 2 zeigt dabei, daß jeglicher Kontakt der Druckflüssigkeit mit dem Wärmedämmaterial und somit dessen Beschädigung durch die Druckflüssigkeit ausgeschlossen ist.

Fig. 2 veranschaulicht des weiteren einen besonderen Aspekt der vorliegenden Erfindung, nämlich eine spezifische Ausgestaltung des Tiefziehstempels 15 zur Herstellung einer solchen Gehäusehälfte eines Katalysators, die, wie in Fig. 1 dargestellt, einen schrägen Anschlußbereich aufweist. Hierzu ist in den Tiefziehstempel ein innerer Stempel integriert, und zwar in der Weise verschiebbar, daß er - wie in Fig. 2 gezeigt - über die Kontur des Tiefziehstempels 15 herausragt oder aber vollständig in diesem aufgenommen ist. Zur Betätigung des inneren Stempels 21 dient ein Keilschieber 22. Soll der Tiefziehstempel 15 nach Abschluß der Umformung mittels hydromechanischem Tiefziehen aus der entsprechenden Gehäusehälfte herausgezogen werden, wird zunächst der Keilschieber 22 gemäß Pfeil A zurückgezogen, wodurch der innere Stempel 21 in das Innere des Tiefziehstempels 15 zurückgezogen wird.

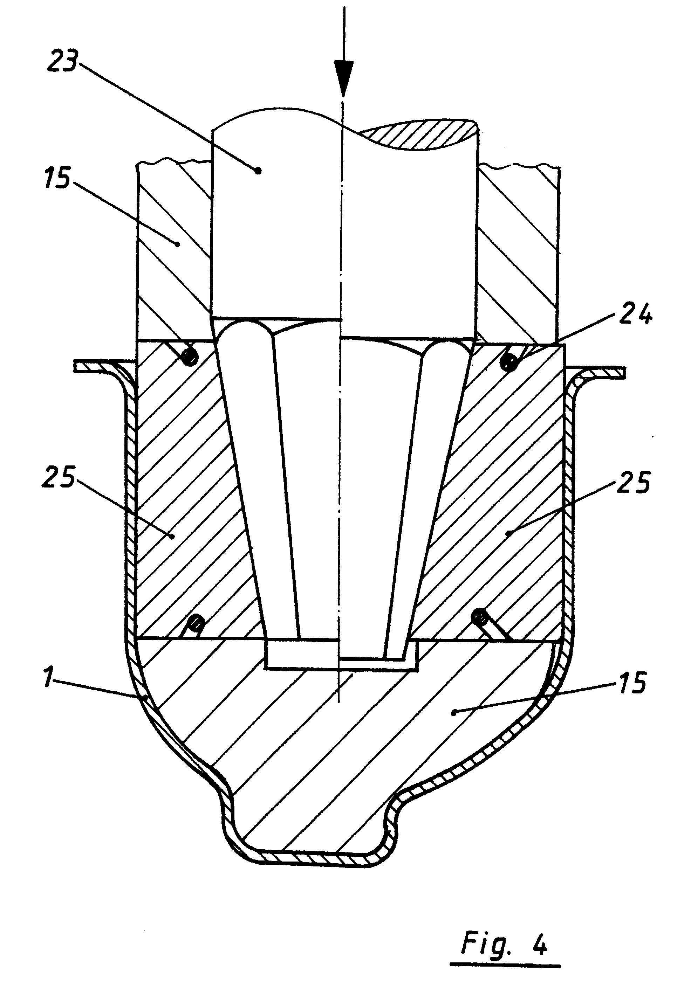

Zur Kompensation der Fertigungstoleranzen des Katalysator- bzw. Rußfilterkörpers läßt sich der in Fig. 4 veranschaulichte segmentierte Tiefziehstempel 15 einsetzen. Er verfügt über eine Mehrzahl radial verschiebbarer Spreizsegmente 25. Diese können durch einen Spreizstempel 23 in Abhängigkeit von den tatsächlichen Abmessungen des in dem Gehäuse aufzunehmenden Katalysatorkörpers mehr oder weniger weit radial nach außen gedrückt werden. In der linken Hälfte der Fig. 4 befindet sich das Spreizsegment 25 in seiner radial innersten Stellung, während es in der rechten Hälfte der Fig. 4 "ausgefahren" ist. Die Verstellung der Spreizsegmente erfolgt durch axiales Verschieben des Spreizstempels 23, wobei schräge Gleitflächen des Spreizstempels mit entsprechend geneigten Gleitflächen der Spreizsegmente zusammenwirken. Rückholfedern 24 bewirken eine Rückstellung der Spreizsegmente in ihrer an den Gleitflächen des Spreizstempels anliegende Stellung.

Die Spreizsegmente können vor, während oder nach dem Umformprozeß nach außen gedrückt werden; es ist somit in gleicher Weise möglich, bereits beim Tiefziehen Gehäusehälften mit unterschiedlich dimensionierten Lagerbereichen herzustellen wie auch mit einem Mindestdurchmesser hergestellte Gehäusehälften nachträglich aufzuweiten.

## Patentansprüche

1. Abgasreinigungsvorrichtung für einen Verbrennungsmotor mit einem quer zur Durchströmungsrichtung geteilten metallischen Gehäuse (1) und mindestens einem darin gelagerten Katalysator- oder Rußfilterkörper (7), wobei die beiden Gehäusehälften (2, 3) jeweils einen Anschlußbereich (4), einen konischen Übergangsbereich (5) und einen, bevorzugt zylindrischen, Lagerbereich (6) umfassend einstückig aufgebaut sind,
dadurch gekennzeichnet,
daß jede der beiden Gehäusehälften (2, 3) durch hydromechanisches Tiefziehen aus einem ebenen Blechzuschnitt (14) hergestellt ist.

2. Verfahren zur Herstellung einer Abgasreinigungsvorrichtung für einen Verbrennungsmotor mit einem quer zur Durchströmungsrichtung geteilten metallischen Gehäuse (1) und mindestens einem darin gelagerten Katalysator- oder Rußfilterkörper (7), wobei die beiden Gehäusehälften (2, 3) jeweils einen Anschlußbereich (4), einen konischen Übergangsbereich (5) und einen, bevorzugt zylindrischen, Lagerbereich (6) umfassend einstückig aufgebaut sind, umfassend die folgenden Schritte:
- Zuschneiden von zwei Blechzuschnitten (14) aus einem ebenen Blech, alternativ Umformen vom Coil;
- Umformen der Blechzuschnitte (14) zu Gehäusehälften (2, 3) mit jeweils einem Anschlußbereich (4), einem konischen Übergangsbereich (5) und einem, bevorzugt zylindrischen, Lagerbereich (6) durch hydromechanisches Tiefziehen;
- Abtrennen der Zarge;
- Lochen der Gehäusehälften (2, 3) im jeweiligen Anschlußbereich (4);
- Einsetzen des mindestens einen Katalysator- bzw. Rußfilterkörpers (7) in die Gehäusehälften (2, 3);
- Zusammenfügen der Gehäusehälften (2, 3); und
- Verbinden der Gehäusehälften (2, 3) miteinander mittels einer in Umfangsrichtung umlaufenden Naht.

3. Verfahren nach Anspruch 2,
dadurch gekennzeichnet,
daß beim Umformen der Gehäusehälftenzuschnitte (14) auf diesen dem Tiefziehstempel (15) zugewandt Innentrichterzuschnitte (19) aufliegen, welche gemeinsam mit den Gehäusehälftenzuschnitten (14) verformt und danach gelocht werden.

4. Verfahren nach Anspruch 2,
dadurch gekennzeichnet,
daß die beiden Gehäusehälften (2, 3) mittels einer Schweißnaht (10) miteinander verbunden werden.

5. Verfahren nach Anspruch 2,
dadurch gekennzeichnet,
daß die beiden Gehäusehälften (2, 3) mittels einer Falzung miteinander verbunden werden.

6. Verfahren nach Anspruch 3,
dadurch gekennzeichnet,
daß vor der gemeinsamen Umformung von Gehäusehälftenzuschnitt (14) und Innentrichterzuschnitt (19) zwischen diese eine Lage (18) eines Wärmedämmaterials eingebracht wird.

7. Verfahren nach Anspruch 6,
dadurch gekennzeichnet,
daß die Lage (18) des Wärmedämmaterials radial von außen nach innen gerichtete Ausschnitte (20) aufweist.

8. Verfahren nach Anspruch 2,
dadurch gekennzeichnet,
daß beim Umformen der Gehäusehälftenzuschnitte (14) in die Lageabschnitte (6) achsparallele Sicken eingebracht werden.

9. Verfahren nach Anspruch 2,
dadurch gekennzeichnet,
daß die fertigungsbedingten Toleranzen des Katalysator- oder Rußfilterträgers durch ein in Längsrichtung abschnittweise segmentiertes Werkzeug kompensiert werden können.

10. Verfahren nach Anspruch 2,
dadurch gekennzeichnet,
daß beim Umformen der Gehäusehälftenzuschnitte (14) ein schräger Anschlußbereich (4) ausgeformt wird.

11. Verfahren nach Anspruch 2,
dadurch gekennzeichnet,
daß nach dem Umformen der Gehäusehälften der Anschlußbereich gelocht wird.

## Claims

1. Exhaust gas purification device for an internal combustion engine, having a metal housing (1) divided transversely to the direction of flow and at least one catalyst- or soot filter member (7) mounted therein, the two housing halves (2, 3) each being constructed in one piece so as to comprise a connection region (4), a conical transition region (5) and a preferably cylindrical mounting region (6),
characterized in that
each of the two housing halves (2, 3) is produced by hydromechanical deep-drawing from a flat sheet-metal blank (14).

2. Method of manufacturing an exhaust gas purification device for an internal combustion engine, having a metal housing (1) divided transversely to the direction of flow and at least one catalyst- or soot filter member (7) mounted therein, the two housing halves (2, 3) each being constructed in one piece so as to comprise a connection region (4), a conical transition region (5) and a preferably cylindrical mounting region (6), said method comprising the following steps:
- cutting to size two sheet-metal blanks (14) from a flat metal sheet, alternatively shaping from the coil;
- shaping the sheet-metal blanks (14) to form housing halves (2, 3), each having a connection region (4), a conical transition region (5) and a preferably cylindrical mounting region (6), by hydromechanical deep-drawing;
- separating the frame;
- perforating the housing halves (2, 3) in the respective connection regions (4);
- inserting the catalyst- or soot filter member (7), of which there is at least one, into the housing halves (2, 3);
- joining the housing halves (2, 3); and
- connecting the housing halves (2, 3) by means of a seam running round in direction of circumference.

3. Method according to Claim 2,
characterized in that,
when shaping the blanks (14) for the housing halves, inner-funnel blanks (19) turned towards the deep-drawing die (15) rest on these, the inner-funnel blanks (19) being shaped together with the housing-half blanks (14) and then being perforated.

4. Method according to Claim 2,
characterized in that
the two housing halves (2, 3) are joined together by means of a weld seam.

5. Method according to Claim 2,
characterized in that
the two housing halves (2, 3) are joined together by means of a folded seam.

6. Method according to Claim 3,
characterized in that,
before the combined shaping of housing-half blank (14) and inner-funnel blank (19), a layer (18) of a heat-insulating material is placed between these.

7. Method according to Claim 6,
characterized in that
the layer (18) of heat-insulating material has cutouts (20) pointing radially from the outside inwards.

8. Method according to Claim 2,
characterized in that,
when shaping the blanks (14) for the housing halves, axially parallel beads are placed in the mounting portions (6).

9. Method according to Claim 2,
characterized in that
the production-related tolerances of the catalyst- or soot filter carrier can be compensated by a tool segmented in portions in longitudinal direction.

10. Method according to Claim 2,
characterized in that,
when shaping the blanks (14) for the housing halves, an inclined connection region (4) is formed out.

11. Method according to Claim 2,
characterized in that,
after shaping the housing halves, the connection region is perforated.

## Revendications

1. Dispositif d'épuration des gaz d'échappement pour un moteur à combustion interne comprenant un boîtier (1) métallique divisé transversalement à la direction d'écoulement et au moins un élément de catalyseur ou de filtre à suies (7) monté dans celui-ci, les deux moitiés de boîtier (2, 3) formant un ensemble monobloc avec chacune une zone de raccordement (4), une zone de transition (5) conique et une zone d'enceinte (6), de préférence cylindrique, caractérisé par le fait chacune des deux moitiés de boîtier (2, 3) est fabriquée à partir d'un flan de tôle (14) plan, par un procédé d'emboutissage profond hydromécanique.

2. Procédé de fabrication d'un dispositif d'épuration des gaz d'échappement pour un moteur à combustion interne, comprenant un boîtier (1) métallique séparé transversalement à la direction d'écoulement et au moins un élément de catalyseur ou de filtre à suies (7) monté dans celui-ci, les deux moitiés de boîtier (2, 3) formant un ensemble monobloc avec chacune une zone de raccordement (4), une zone de transition (5) conique et une zone d'enceinte (6), de préférence cylindrique, comprenant les étapes suivantes :
- découpe de deux flans de tôle (14) dans une tôle plane ou comme variante formage à partir de tôle en bobine,
- façonnage des flans de tôle (14) en moitiés de boîtier (2, 3) avec chacune une zone de raccordement (4), une zone de transition (5) conique et une zone d'enceinte (6), de préférence cylindrique, par un procédé d'emboutissage profond hydromécanique;
- séparation des cadres;
- perçage des moitiés de boîtier (2, 3) dans la zone de raccordement (4) concernée,
- insertion de l'élément catalyseur ou de l'élément filtre à suies (7) dans les moitiés de boîtier (2, 3);
- rapprochement des moitiés de boîtier (2, 3) et
- assemblage des moitiés de boîtier (2, 3) par une ligne de joint périphérique.

3. Procédé selon la revendication 2, caractérisé par le fait que lors du façonnage des flans (14) des moitiés de boîtier, des flans de cône intérieur (19) sont placés sur ceux-ci, côté poinçon (15), lesquels flans sont façonnés en même temps que les flans de moitié de boîtier (14), puis percés.

4. Procédé selon la revendication 2, caractérisé par le fait que les deux moitiés de boîtier (2, 3) sont liées l'une à l'autre par un cordon de soudure (10).

5. Procédé selon la revendication 2, caractérisé par le fait que les deux moitiés de boîtier (2, 3) sont liées l'une à l'autre par un agrafage.

6. Procédé selon la revendication 3, caractérisé par le fait qu'avant le façonnage simultané des flans des moitiés de boîtier (14) et des flans de cône intérieur (19), on place une feuille (18) d'un matériau thermiquement isolant entre ceux-ci.

7. Procédé selon la revendication 6, caractérisé par le fait que la feuille (18) de matériau thermiquement isolant est pourvue d'entailles (20) orientées de l'extérieur vers l'intérieur.

8. Procédé selon la revendication 2, caractérisé par le fait que des moulures parallèles sont formées dans les parties de feuille (6) lors du façonnage des flans de moitié de boîtier (14).

9. Procédé selon la revendication 2, caractérisé par le fait que les tolérances de fabrication du support de catalyseur ou de filtres à suies peuvent être compensées à l'aide d'un outil segmenté par endroits dans la direction longitudinale.

10. Procédé selon la revendication 2, caractérisé par le fait qu'une zone de raccordement (4) en biais est formée lors du façonnage des flans de moitiés de boîtier (14).

11. Procédé selon la revendication 2, caractérisé par le fait que la zone de raccordement est percée après le façonnage des flans de moitiés de boîtier.
